# EUROPEAN PATENT APPLICATION

(11) **EP 2 587 430 A1**
(43) Date of publication of application: **01.05.2013**
(21) Application number: 12182698.6
(22) Date of filing: 31.08.2012
(51) Int. Cl.: G06Q 20/20

(54) **Customer identification with automated transactions**

(30) Priority: 31.10.2011 US 201113285364
(71) Applicant: NCR Corporation, Duluth, GA 30096 (US)
(72) Inventor: Kobres, Erick, Lawrenceville, GA 30043 (US)
(74) Representative: MacLeod, Roderick William

(57) **Abstract**

Techniques for customer identification with automated transactions are provided. A mobile app is downloaded to a customer's mobile device (step 220). The mobile app directs the customer to enroll for mobile transaction processing with a remote service. After enrollment, a unique barcode, token, or encoded string is pushed to the device (step 260). The mobile app securely retains the barcode, token, or encoded string on the device and when the customer subsequently uses the device to engage in automated transaction processing, the mobile app presents the barcode, token, or encoded string to initially and automatically identify customer and/or the customer's device for a transaction.

## Description

Consumers are increasingly using kiosks to conduct business with enterprises. The kiosks come in a variety of sizes and are used for a variety of purposes. Some kiosks are situated at drive-through locations, such as fast food establishments, pharmacies, banks, and the like. Other kiosks are located at pedestrian access locations, such as petrol stations, airlines, grocery stores, department stores, and the like.

In addition, what is considered a kiosk is evolving with today's technology. For example, digital signs now provide advertisements and mechanisms for users to interact with the displays to perform transactions. Such mechanisms include Bluetooth (trade mark) communication, Near Field Communication (NFC), Quick Response (QR) (trade mark) code scanning, WiFi communication, and the like.

So, increasingly customers are engaging in a variety of technologies to automatically interact with enterprises to perform transactions. The transactions may result in purchases or may result in such things as registration for loyalty programs, enrolling in promotional events, requesting additional information for a good or service, and others. That is, the transactions via these kiosks are not strictly tied to purchases although some transactions are purchase related.

One problem with the variety of existing mechanisms used to interact with customers is that often the customers are required to enter a variety of identifying information or other information before a transaction can begin for purposes of initially identifying the customers. This is often time consuming and redundant for repeat customers utilizing an automated transaction mechanism for a retailer. Many retailers do not see a way around this issue because some level of security is needed before transacting with a customer and the identity of the customer is often needed before a transaction can commence.

In various embodiments, techniques for automated transactions with an enterprise are presented. According to an embodiment, a method for an automated transaction with an enterprise system is provided.

Specifically, an app request is received for a mobile app and the mobile app is delivered to a specific mobile device associated with the request. Next, a registration request is obtained, the registration request sent from the mobile app on the mobile device and then a consumer is registered. A token is generated that uniquely identifies the consumer and/or the mobile device. Finally, the token is delivered to the mobile app and retained on the mobile device for delivery to an enterprise terminal device as part of an automated mobile transaction performed with the mobile device.

According to a first aspect of the present invention there is provided a method comprising: receiving an app request for a mobile app; delivering the mobile app to a mobile device; obtaining a registration request from the mobile app; registering a consumer; generating a token that uniquely identifies the consumer and/or the mobile device; and sending the token to the mobile app for subsequent delivery to an enterprise terminal device as part of an automated mobile transaction performed with the mobile device.

According to a second aspect of the present invention there is provided a method comprising: requesting a registration with an enrollment service when a flag value indicates the registration is incomplete; confirming success of the registration; obtaining a token from the enrollment service that uniquely identifies a consumer associated with the mobile device when the registration is being processed a first time; securely storing the token on the mobile device when the registration is being processed the first time; and delivering the token to an enterprise terminal device at a start of an automated mobile transaction to identify the consumer for an enterprise associated with the automated mobile transaction.

Delivering the token to an enterprise terminal device optionally further includes signing the token with a private key before providing to the enterprise terminal device.

According to a third aspect of the present invention there is provided a processor-implemented method programmed in a non-transitory processor-readable medium and to execute on one or more processors of a server configured to execute the method, comprising: receiving, at the server, an app request for a mobile app; delivering, from the server, the mobile app, the mobile app delivered to a mobile device; obtaining, at the server, a registration request, the registration request sent from the mobile app on the mobile device; registering, at the server, a consumer; generating, at the server, a token that uniquely identifies the consumer and/or the mobile device; and sending, from the server, the token, the token delivered to the mobile app and retained on the mobile device for delivery to an enterprise terminal device as part of an automated mobile transaction performed with the mobile device.

Receiving optionally further includes receiving the request from the consumer interacting with a website interface for the method, the consumer using a device to access the website interface that is different from that of the mobile device.

Receiving optionally further includes receiving the request from the consumer interacting with a website interface for the method, the consumer using the mobile device to access the website interface.

Receiving optionally further includes receiving the request from an enterprise transaction service associated with the enterprise terminal device, the consumer performing an enterprise registration with the enterprise transaction service.

Receiving optionally further includes receiving the request from the consumer utilizing an interface of the enterprise terminal device.

Delivering optionally further includes identifying the mobile device as one of: a mobile phone, a tablet, a personal digital assistant, and a laptop.

Obtaining optionally further includes acquiring from the registration request identifying characteristics associated with the mobile device, the identifying characteristics being gathered by the mobile app.

Registering optionally further includes interacting with the consumer to acquire registration information defined by a policy.

Registering optionally further includes contacting an enterprise transaction service for with a mobile device identifier sent from the mobile app to confirm a prior registration of the consumer with the enterprise transaction service to confirm registration.

Sending optionally further includes encrypting the token and/or digitally signing the token.

According to a fourth aspect of the present invention there is provided a processor-implemented method programmed in a non-transitory processor-readable medium and to execute on one or more processors of a mobile device configured to execute the method, comprising: requesting, from the mobile device, a registration with an enrollment service when a flag value indicates the registration is incomplete; confirming, at the mobile device, success of the registration; obtaining, at the mobile device, a token from the enrollment service that uniquely identifies a consumer associated with the mobile device when the registration is being processed a first time; securely, at the mobile device, storing the token on the mobile device when the registration is being processed the first time; and delivering, from the mobile device, the token to an enterprise terminal device at a start of an automated mobile transaction to identify the consumer for an enterprise associated with the automated mobile transaction.

Requesting optionally further includes initiating the registration at a first startup of the method or when the flag value indicates that the registration is incomplete.

Requesting optionally further includes initiating the registration at a direction of the consumer that activates an option for the registration and when the flag value indicates that the registration is incomplete.

Requesting optionally further includes providing to the enrollment service a mobile device identifier as part of the registration.

Delivering optionally further includes providing the token to the enterprise terminal device in a format defined by a policy.

Delivering optionally further includes signing the token with a private key before providing to the enterprise terminal device.

According to a fifth aspect of the present invention there is provided a processor-implemented method programmed in a non-transitory processor-readable medium and to execute on one or more processors of an enterprise terminal device configured to execute the method, comprising: obtaining, via the enterprise terminal device, a token, the token automatically obtained from a mobile device of a consumer, the mobile device communicating with the enterprise terminal device; identifying, at the enterprise terminal device, the consumer via the token; authenticating, at the enterprise terminal device, the consumer based on a policy; accessing, at the enterprise terminal device, consumer information for the consumer based on successful authentication; and transacting, at the enterprise terminal device, with the consumer using the consumer information via the mobile device of the consumer.

Identifying optionally further includes validating a signature of the token before identifying the consumer via the token.

Identifying optionally further includes consulting a remote service with the token to receive a customer identifier that identifies the customer.

Accessing optionally further includes consulting a remote service with a customer identifier obtained via the token to acquire the customer information.

These and other aspects of the present invention will be apparent from the following specific description, given by way of example, with reference to the accompanying drawings, in which:

FIG. 1 is a flow diagram for conducting enrollment of a consumer with enterprise automated transaction systems, according to an example embodiment;

FIG. 2 is a diagram of a method for identification of a consumer with an automated transaction system, according to an example embodiment.;

FIG. 3 is a diagram of another method for identification of a consumer with an automated transaction system, according to an example embodiment; and

FIG. 4 is a diagram of yet another method for identification of a consumer with an automated transaction system, according to an example embodiment.

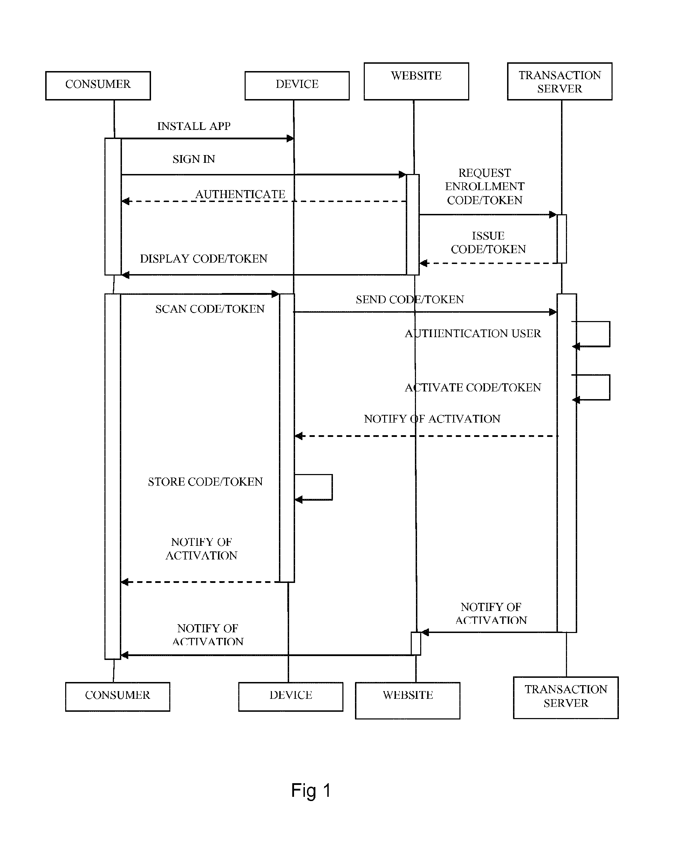

FIG. 1 is a flow diagram for conducting enrollment of a consumer with enterprise automated transaction systems, according to an example embodiment. The components of the diagram are implemented in non-transitory computer-readable storage medium for execution on one or more processing devices that are configured to execute the components. The components are also enabled to operate and communicate with one another over a network. The network can be wired, wireless, or a combination of wired and wireless.

It is noted that the components and the interactions of the components shown in the FIG. 1 are presented for illustrative purposes in a sample scenario with a sample enterprise system. So, other arrangements and interactions of the components are possible without departing from the beneficial teachings presented herein and below.

Various techniques presented herein provide for a mechanism that enables a retailer, bank, travel service provider, government agency, or other business to enable their mobile applications to consume secure mobile transaction services. In an embodiment, the techniques are provided on the enterprise's web site or kiosk, enabling its customers an easy way to enroll a mobile device and "link" it to their online accounts. Once the mobile device is linked, the mobile device includes an encrypted token that simply enables the device to connect to a mobile transaction service. This does not have to include authentication of the customer. So, the user still has to authenticate at the time of service (interaction with the mobile transaction service). This is similar to having a debit card loaded on the phone, but not having the Personal Identification Number (PIN) for using that debit card loaded on the phone. The technique tentatively identifies the consumer (the terms "consumer," "customer," and "user" may be used synonymously and interchangeably herein); but still utilizes a subsequent authentication technique.

In the sample flow process shown in the FIG. 1, a consumer downloads a mobile application from an enterprise (e.g., government, institution, organization, bank, retailer, etc.) that includes mobile transaction processing for that enterprise. The download may also occur from a third-party service that distributes the mobile transaction processing on behalf of one or more enterprises.

Next, the consumer initiates the mobile app or selects an "enroll" function/feature associated with an interface of the downloaded mobile app.

Then, the mobile app directs the customer to an enterprise web site, kiosk, or other service point to enroll his/her mobile device for automated consumer identification features associated with mobile transaction processing.

The consumer enrolls for the program by signing into (authenticating to) the enterprise using the enterprise web site, kiosk or other point of service - presumably through an existing secure channel, such as an Secure Socket Layer web site.

Optionally, the consumer enrolls various accounts, such as bank accounts, store charge accounts, loyalty accounts, etc. that he/she wishes to have available from his/her mobile device.

The enterprise web site presents the customer with necessary instructions and/or terms of service and once agreed to, the site displays a universally unique two-dimensional (2D) barcode (Quick Response (QR) code) or string of encoded characters including an encrypted and signed token uniquely identifying the customer to the enterprise.

The mobile app stores this data on the mobile device for future use in identifying this customer when the app is used with the customer's mobile transaction service points.

When the consumer wishes to establish a connection to the enterprise's service point, the mobile app transmits this token to the service point, providing a measure of certainty that the mobile device being used is the one that was enrolled by the consumer.

Optionally, derivative single-use tokens may be created from this token, again, to identify the user of the mobile app to the service point. In other words, transaction based tokens can be derived from the initial token (encoded string, barcode, or QR code), such that each transaction based token is recognized by a service point as a registered mobile device of a specific customer. Additionally, a combination of tokens and/or other uniquely identifying information, such as device Media Access Control (MAC) identifier, phone number, etc. may be used.

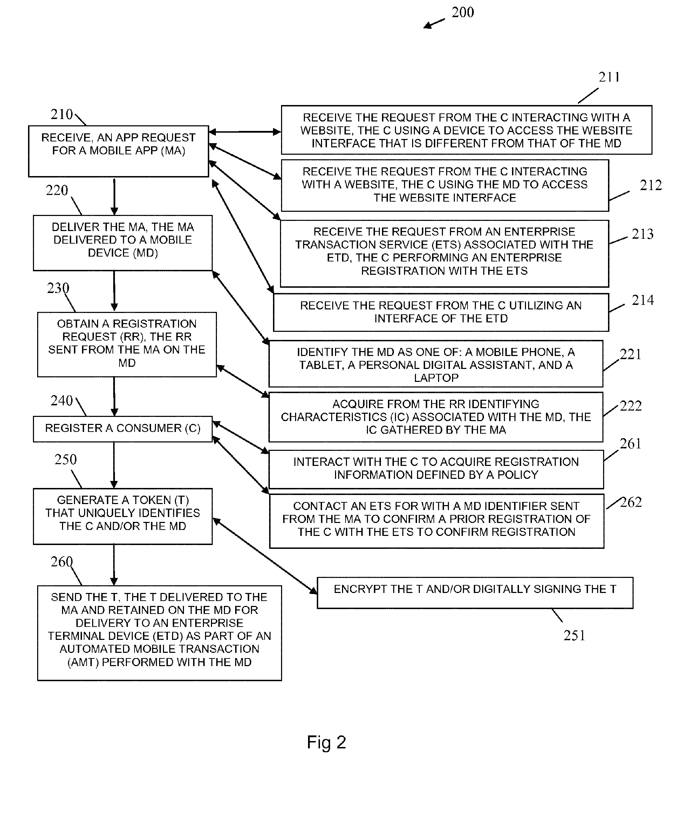

FIG. 2 is a diagram of a method 200 for identification of a consumer with an automated transaction system, according to an example embodiment. The method 200 (hereinafter "enrollment service") is implemented as instructions programmed and residing on a non-transitory computer-readable (processor-readable) storage medium and executed by one or more processors. The processors are specifically configured and programmed to process the enrollment service. The enrollment service operates over a network. The network is wired, wireless, or a combination of wired and wireless.

The enrollment service executes on one or more processors of a server. In some embodiments, the enrollment service operates in a cloud processing environment and is available as a cloud service over the Internet to enterprises and consumers.

In other cases, the enrollment service is controlled from a server of a specific enterprise offering mobile transaction processing.

So, the enrollment service can be a third-party service offered to a plurality of enterprises or can be controlled and managed within a processing environment of a specific enterprise offering a specific mobile transaction processing. Both embodiments can occur simultaneously in the industry as well utilizing different instantiations of the enrollment service. That is, for security reasons financial institutions may desire to manage their own version of the enrollment service within their own controlled processing environment, whereas retail establishments may opt for third-party outsourcing to utilize the enrollment service.

The processing of the preference enrollment service interacts with consumer mobile device apps, applications and services of enterprise POS systems, and/or other third-party services utilized by consumers and/or enterprises for transaction processing, loyalty processing, and/or other customer relationship management processing.

At 210, the enrollment service receives a mobile app request. This is a request to deliver and initiate a mobile app to a mobile device of a specific consumer. The mobile app permits registration of the consumer to use an enrollment token for initial identification of a consumer to an enterprise transaction service, via an enterprise's terminal device. Receipt of the request can occur in a variety of configurable manners.

For example, at 211, the enrollment service receives the request from a consumer who is interacting with a website interface of the enrollment service. In this particular embodiment, the consumer is accessing the website interface using a device that is different from the mobile device that is being registered. This case may occur when the consumer is using a laptop, desktop computer, and/or tablet to initially make the request where the mobile app is going to be pushed and installed on a mobile phone of the consumer. Of course, this situation could be reversed as well where the request is sent via a mobile phone for registration of a laptop and/or tablet. The point is the consumer can access a website interface via a different device then the mobile device, which will eventually execute the mobile app.

In another scenario, at 212, the enrollment service receives the request from the consumer who is interacting with a website interface of the enrollment service and the consumer is using the mobile device, which is to receive mobile app upon successful processing of the request. Here, the same mobile device making the request for the mobile app receives and executes the mobile app upon successful processing of the request by the enrollment service.

In yet another case, at 213, the enrollment service receives the request from an enterprise transaction service, which is associated with the enterprise terminal device. Here, the consumer is performing or did perform an enterprise registration with the enterprise transaction service and the enterprise transaction service upon direction or approval of the consumer (during that registration process) contacts the enrollment service (on behalf of the consumer) to make the request. So, a third-party service can make the request on behalf of the consumer in some embodiments.

In still another situation, at 214, the enrollment service receives the request from the consumer who is utilizing an interface of the enterprise terminal device. The enterprise terminal device being a Point-Of-Sale (POS) or automated transaction system of an enterprise. This may occur when a consumer initially transacts with an endpoint terminal (the enterprise terminal device) and has not previously registered for the automated enrollment token. The enterprise terminal device may at the start of the automated transaction or at the end engage the consumer to make the request for the enrollment token for future transactions with the enterprise and the enterprise terminal device and other enterprise terminal devices of the enterprise.

At 220, the enrollment service delivers the mobile app to an identified mobile device of the consumer. In some cases, the mobile app may be dynamically pushed over a network to the mobile device and automatically initiated and installed. In other cases, the consumer is sent a link to download the mobile app from a location over the network identified by the enrollment service. The link may be sent to the mobile device, such as via a Short Messaging Service (SMS) text message, via an email, and the like. In other cases, the link may be sent via an out-of-band transaction with respect to the mobile device. So, a different device may receive the link or may process the link to force delivery of the mobile app to the mobile device. It may also be that the consumer receives an automated phone call that asks the consumer to perform some actions, perhaps some authentication using touch tone commands and such action results in the mobile app being pushed to the mobile device.

According to an embodiment, at 221, the enrollment service identifies the mobile device as one of: a mobile phone, a tablet, a personal digital assistant (PDS), a laptop, and the like.

At 230, the enrollment service obtains a registration request. This registration request is sent from the mobile app that is now installed and executing on the mobile device of the consumer.

In some instances, at 222, the enrollment service acquires the registration request having identifying characteristics associated with the mobile device. The identifying characteristics are gathered by the mobile app when executing on the mobile device. Identifying characteristics can include a variety of information that may be useful for security purposes, configuration purposes, and/or metric/profile information. For example, the identifying characteristics may include a Media Access Control (MAC) identifier, an operation system (OS) version or type identifier, a mobile device type, data and time information, memory capacity, storage capacity, device drivers (such as a Near Field Communication (NFC) driver, camera driver (for barcode or QR scanning), resource identifiers for software capabilities (such as Optical Character Recognition (OCR) identifiers, and the like), etc. The identifying characteristics can be used to have the mobile app notify the consumer, via the mobile device, that updates to resources are needed or that initial resources should be obtained by the consumer before full benefits and usage of the automated customer recognition can be realized with enterprise terminal devices for automated transactions, via the mobile device. The identifying characteristics may also be used to develop a profile of device characteristics for enterprises or to generate a device print that uniquely identifies the device. Other benefits and uses of the identifying characteristics can occur in addition to those benefits and uses listed above.

At 240, the enrollment service registers the consumer. That is, the consumer is uniquely tied to one or more particular enterprises and particular enterprise customer databases. It is noted that as part of this registration to tie the customer to a particular enterprise, the consumer may be required to authenticate or provide authentication credentials required by the particular enterprise. So, in situations where the enrollment service is registering the consumer to multiple enterprise systems, the consumer may be required to authenticate according to the authentication mechanism for each system. It is noted, that in some cases the enrollment service may be interacting with a particular enterprise transaction service and not the consumer (as mentioned below) where that particular enterprise transaction service received approval from the consumer to register the consumer with the enrollment service; and in such cases, no authentication is required because the consumer authenticated to the particular enterprise transaction service to authorize the registration in the first instance. Moreover, in cases where registration is being completed by an enterprise transaction service, the enterprise transaction service has identifying information to identify the customer and link the customer to its own customer database system.

So, in one case, at 261, the enrollment service interacts with the customer, via the mobile app, to acquire registration information to identify the customer and to identify particular enterprise transaction services and accounts that the customer has with those particular enterprise transaction services. The specific details of what is needed in the registration information can be driven by a policy that is automatically evaluated by the mobile app and that is defined by a particular enterprise transaction service. Again, the consumer can iterate the registration process supplying different registration information defined by different policies for multiple enterprise transaction services.

In another situation, at 262, the enrollment service contacts one or more particular enterprise transaction services with a mobile device identifier and/or a mobile app identifier (each instance of the mobile app can be customized for a particular consumer and/or particular mobile device of the particular consumer); the mobile device identifier and/or mobile app identifier sent from the mobile app processing on the mobile device. Moreover, the contact with the one or more particular enterprise transaction services is done for purposes of confirming a prior registration of the consumer with each particular enterprise transaction service. In this instance, the mobile device identifier and/or mobile app identifier was previously sent to the enrollment service from a particular enterprise transaction service so that the enrollment service can tie it to a particular enterprise transaction service and the registration information for the enrollment token provided by the particular enterprise transaction service.

At 250, the enrollment service generates a token, which uniquely identifies the consumer and/or the mobile device of the consumer and that ties that unique identification to one or more particular enterprise transaction services. The token can be any encoded data string, such as but not limited to a barcode or QR code. The token may also be in a format that can be processed by NFC devices. It may also be that the token is in a generic format that the mobile app can render to formats needed by particular enterprise terminal devices. So, the token can be in a generic coded string format that the mobile app subsequently renders to a barcode, a QR code, or a NFC code depending upon the particular enterprise terminal device that the consumer is subsequently interacting with for an automated mobile device transaction.

According to an embodiment, at 251, the enrollment service encrypts and/or digitally signs the token. The token can be signed by the enrollment service, one or more particular enterprise transactions services, the consumer, the mobile app, the mobile device, all of these entities, or some combination of these entities.

At 260, the enrollment service sends the token to the mobile app processing on the mobile device of the consumer. The mobile app securely retains the token on the mobile device for delivery to particular enterprise terminal devices as part of automated mobile transactions that are performed via the mobile device with those enterprise terminal devices.

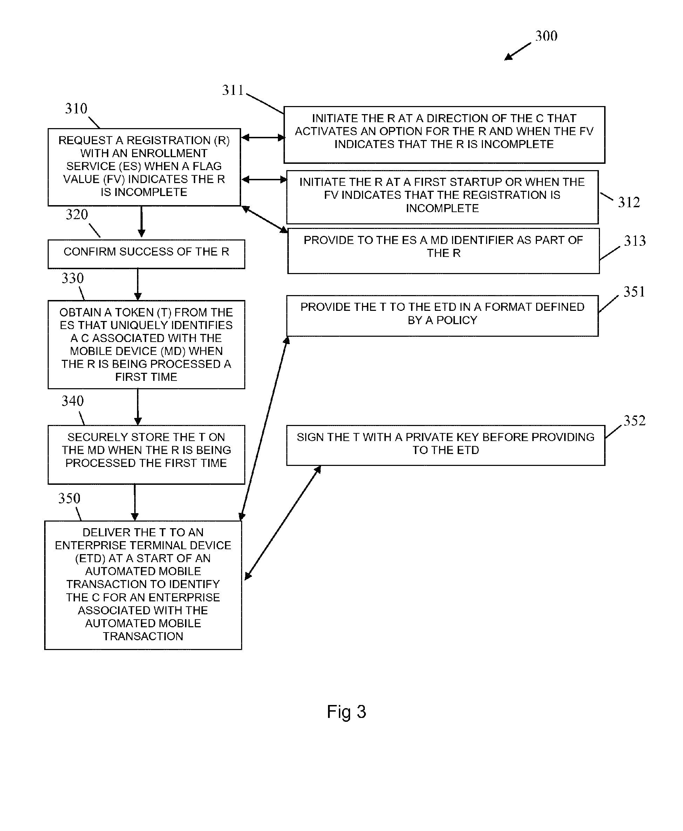

FIG. 3 is a diagram of another method 300 for identification of a consumer with an automated transaction system, according to an example embodiment. The method 300 (hereinafter "mobile app") is implemented as instruction and programmed within a non-transitory computer-readable (processor-readable) storage medium that executes on one or more processors of a mobile device (e.g., mobile phone, personal digital assistant (PDA), tablet, laptop, etc.); the processors of the mobile device are specifically configured to execute the mobile app. The mobile app is operational over a network; the network is wired, wireless, or a combination of wired and wireless.

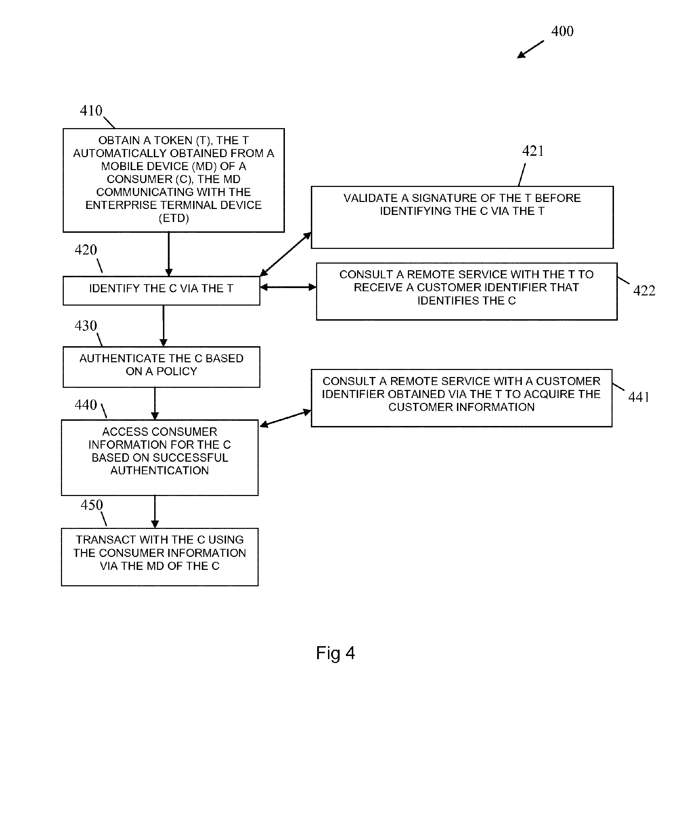

The mobile app is controlled by a consumer (customer and/or user) and interacts with the preference enrollment service, represented by the method 200 of the FIG. 2 and may also interact with an enterprise terminal device (discussed below with reference to the FIG. 4).

It is noted that the mobile app can be installed and initiated by the consumer on the mobile device in a variety of manners before the processing occurs as detailed below. For instance, in one situation during a registration process of the mobile device with a preference configuring service (such as the one discussed above with reference to the FIG. 2), the mobile app is downloaded and initiated on the mobile device. In another instance, during an initial contact by the mobile device with an enterprise terminal device of an enterprise, the customer is directed to a website of the enrollment service (discussed above with reference to the FIG. 2) where the registration process occurs and the mobile app is downloaded and initiated on the mobile device.

Other situations can result in the mobile app's installation as well. For instance, as part of a registration process in a loyalty program with a specific enterprise, the consumer may agree to engage the enrollment service features. This may result in the enterprise's registration service in contacting the enrollment service with details expected by the enrollment service (as discussed above) on behalf of the consumer, and at some later point result in the enrollment service dynamically pushing the mobile app for initiating on the mobile device of the consumer.

At 310, the mobile app requests a registration with an enrollment service (such as the enrollment service discussed above with reference to the FIG. 2). The processing at 310 occurs when a flag value maintained on the mobile device that processes the mobile app indicates that registration of the consumer and/or the mobile device is incomplete.

According to an embodiment, at 311, the mobile app initiates the registration at a direction of the consumer that activates an option for the registration when the flag value indicates that the registration is incomplete. So, the registration may require manual initiation from the consumer interacting, via interfaces, with the mobile app.

In another case, at 312, the mobile app initiates the registration at a first startup of the mobile app. Here, the flag value indicates that the registration is incomplete.

In still another situation, at 313, the mobile app provides to the enrollment service a mobile identifier as part of the registration.

At 320, the mobile app confirms success of the registration. This can be achieved by management of the flag value, such that once the mobile app confirms the flag value is set to show success of registration, the mobile knows registration was completed.

At 330, the mobile app obtains a token from the enrollment service that uniquely identifies the customer and/or the mobile device when the registration is being processed a first time. In other words, as part of the first and initial registration process, the mobile app acquires a token from the enrollment service. If registration was completed previously, then the mobile knows it already has the token. In fact, the presence of the token within the processing environment of the mobile app can indicate to the mobile that the processing of 310-340 can be entirely bypassed each time the mobile app is initiated on the mobile device (device startup). Although it is noted that tokens can expire based on a predefined period of elapsed time or based on occurrence of some predefined event. When a token expires, the token is no longer valid and re-registration may be required to get a new valid token for the mobile device.

At 340, the mobile app securely stores the token on the mobile device when the registration is being processed for the first time.

At 350, the mobile app automatically delivers the token to an enterprise terminal device at a start of an automated mobile transaction to identify the consumer and/or mobile device for an enterprise associated with the automated mobile transaction. Again, the token provides automated customer identification to the enterprise terminal device that is engaged in automated mobile transaction processing with the consumer via the mobile device. The token acquired and associated in the manners discussed herein and above and the token automatically delivered by the mobile app from the mobile device to a particular enterprise terminal device.

According to an embodiment, at 351, the mobile app provides the token to the enterprise terminal device in a format defined by a policy. So, the token can be a barcode, QR code, and/or NFC code based on what the enterprise terminal device is expecting to receive.

In some cases, at 352, the mobile app can also sign the token with a private key before providing the token to the enterprise terminal device for added security during the mobile transaction processing.

FIG. 4 is a diagram of yet another method 400 for identification of a consumer with an automated transaction system, according to an example embodiment. The method 300 (hereinafter "enterprise terminal app") is implemented as executable instructions and programmed within a non-transitory computer-readable (processor-readable) storage medium that executes on one or more processors of an enterprise terminal (e.g., cashier-manned device, self-service kiosk, digital sign, web site of a retail, etc.); the processors of the enterprise terminal app are specifically configured to execute the enterprise terminal app. The enterprise terminal app is operational over a network; the network is wired, wireless, or a combination of wired and wireless.

The FIG. 1 described the processing for automating identification of a consumer and/or a consumer's mobile device for mobile transaction processing as a whole. The FIG. 2 described the processing from the perspective of the remote and server/cloud based enrollment service; the FIG. 3 described the processing from the perspective of the consumer's mobile app on a consumer's mobile device; and the enterprise terminal app of the FIG. 4 describes the processing from an enterprise's transaction system processing on a retail terminal device. A consumer or a consumer's mobile device identification for mobile transaction processing is automated via the interaction among the enrollment service (of the FIG. 2), the mobile app (of the FIG. 3), and the enterprise terminal app (of the FIG. 4).

At 410, the enterprise terminal app obtains a token. The token automatically obtained from a mobile device of a consumer. The mobile device communication with the enterprise terminal device. Such communication can occur via, Bluetooth, WiFi, NFC, Infrared, Radio Frequency, cellular, satellite, *etc.*

At 420, the enterprise terminal app identifies the consumer via the token. The token provides an automatic mechanism for initially identifying the consumer/customer. So, authentication between the consumer and the enterprise terminal app may still be required, if policy so dictates, but at least initially the consumer is automatically identified via the token delivery from a mobile app of the consumer that processes on the mobile device.

According to an embodiment, at 421, the enterprise terminal app validates a signature of the token before identifying the customer via the token. That is, signature validation can provide some form of security that the token is not being feigned by a device to fake the identity of the consumer. The token can be signed as described above with reference to the FIGS. 1-3. In some situations, the token is signed by one party; in other situations all parties or some combination of the parties can have signed the token. The parties include: the enrollment service, the mobile app of the mobile device, the mobile device, an enterprise transaction service, the consumer, or a third-party authentication service used by and trusted by the parties. In some cases, the enterprise terminal device that processes the enterprise terminal app may also be one of the parties.

In an embodiment, at 422, the enterprise terminal app consults a remote service with the token to receive back a customer identifier that identifies the customer. In some situations, the remote service is the enterprise transaction service associated with an enterprise of the enterprise terminal device. In other situations, the remote service is the enrollment service as discussed above with reference to the FIGS. 1-3.

At 430, the enterprise terminal app authenticates the consumer based on a policy. So, an enterprise transaction service or an enterprise system associated with the enterprise terminal device can define or dynamically evaluate a policy that defines what authentication mechanism to use to authenticate the customer and that defines the authentication information to be acquired from or on behalf of the consumer to use with the authentication mechanism.

At 440, the enterprise terminal app access consumer information for the consumer based on successful authentication.

According to an embodiment, at 441, the enterprise terminal app consults a remote service to receive a customer identifier that identifies the customer to an enterprise associated with the enterprise terminal device that the enterprise terminal app executes on. The consultation is achieved over a network connection and the enterprise terminal app provides the remote service with the token, which was supplied by a mobile app of the consumer's mobile device to the enterprise terminal app.

At 450, the enterprise terminal app transacts with the customer using the consumer information via the mobile device of the customer.

So, the initial identification of the customer to begin the transacting in an automated fashion was achieved via the token possessed by the mobile app of the mobile device of the consumer. Once this is communicated, the enterprise terminal app performs additional authentication for security of the transaction according to policy and acquires the customer information to proceed with the automated transaction. The overall process associated with this was described above with respect to the FIG. 1. The processing from the perspective of the enrollment service (token provider) was presented above with respect to the FIG. 2. The processing from the mobile app's perspective on the mobile device of the consumer was presented above with respect to the FIG. 3. Finally, the processing form the enterprise terminal app's perspective on the enterprise terminal device was presented here with respect to the FIG. 4.

The above description is illustrative, and not restrictive. Many other embodiments will be apparent to those of skill in the art upon reviewing the above description. The scope of embodiments should therefore be determined with reference to the appended claims.

In the foregoing description of the embodiments, various features are grouped together in a single embodiment for the purpose of streamlining the disclosure. This method of disclosure is not to be interpreted as reflecting that the claims have more features than are expressly recited in each claim. Rather, as the following claims reflect, inventive subject matter lies in less than all features of a single disclosed embodiment.

## Claims

1. A method comprising:
receiving an app request for a mobile app (step 210);
delivering the mobile app to a mobile device (step 220);
obtaining a registration request from the mobile app (230);
registering a consumer (step 240);
generating a token that uniquely identifies the consumer and/or the mobile device (step 250); and
sending the token to the mobile app for subsequent delivery to an enterprise terminal device as part of an automated mobile transaction performed with the mobile device (step 260).

2. The method of claim 1, wherein receiving an app request for a mobile app further includes receiving the request from the consumer interacting with a website interface for the method, the consumer using a device to access the website interface that is different from that of the mobile device (step 211).

3. The method of claim 1, wherein receiving an app request for a mobile app further includes receiving the request from the consumer interacting with a website interface for the method, the consumer using the mobile device to access the website interface (step 212).

4. The method of claim 1, wherein receiving an app request for a mobile app further includes receiving the request from an enterprise transaction service associated with the enterprise terminal device, the consumer performing an enterprise registration with the enterprise transaction service (step 213).

5. The method of claim 1, wherein receiving an app request for a mobile app further includes receiving the request from the consumer utilizing an interface of the enterprise terminal device (step 214).

6. The method of any preceding claim, wherein delivering the mobile app to a mobile device further includes identifying the mobile device as one of: a mobile phone, a tablet, a personal digital assistant, and a laptop (step 221).

7. The method of any preceding claim, wherein obtaining a registration request from the mobile app further includes acquiring from the registration request identifying characteristics associated with the mobile device, the identifying characteristics being gathered by the mobile app (step 222).

8. The method of any preceding claim, wherein registering a consumer further includes interacting with the consumer to acquire registration information defined by a policy (step 261).

9. The method of any preceding claim, wherein registering a consumer further includes contacting an enterprise transaction service with a mobile device identifier sent from the mobile app to confirm a prior registration of the consumer with the enterprise transaction service to confirm registration (step 262).

10. The method of any preceding claim, wherein sending the token to the mobile app further includes encrypting the token and/or digitally signing the token (step 251).

11. A method comprising:
requesting a registration with an enrollment service when a flag value indicates the registration is incomplete (step 310);
confirming success of the registration (step 320);
obtaining a token from the enrollment service that uniquely identifies a consumer associated with the mobile device when the registration is being processed a first time (step 330);
securely storing the token on the mobile device when the registration is being processed the first time (step 340); and
delivering the token to an enterprise terminal device at a start of an automated mobile transaction to identify the consumer for an enterprise associated with the automated mobile transaction (step 350).

12. The method of claim 11, wherein requesting a registration with an enrollment service further includes initiating the registration at a first startup of the method or when the flag value indicates that the registration is incomplete (step 312).

13. The method of claim 11, wherein requesting a registration with an enrollment service further includes initiating the registration at a direction of the consumer that activates an option for the registration and when the flag value indicates that the registration is incomplete (step 311).

14. The method of claim 11, wherein requesting a registration with an enrollment service further includes providing to the enrollment service a mobile device identifier as part of the registration (step 313).

15. The method of any of claims 11 to 14, wherein delivering the token to an enterprise terminal device further includes providing the token to the enterprise terminal device in a format defined by a policy (step 351).

## Amended claims

### Amended claims in accordance with Rule 137(2) EPC.

**1.** A method comprising:
receiving an app request for a mobile app (step 210);
delivering the mobile app to a mobile device (step 220);
obtaining a registration request from the mobile app (230);
registering a consumer (step 240);
generating a token that uniquely identifies the consumer and/or the mobile device (step 250); and
sending the token to the mobile app for subsequent delivery to an enterprise terminal device as part of an automated mobile transaction performed with the mobile device (step 260), which also utilizes a customer and/or media device authentication technique.

**2.** The method of claim 1, wherein receiving an app request for a mobile app further includes receiving the request from the consumer interacting with a website interface for the method, the consumer using a device to access the website interface that is different from that of the mobile device (step 211).

**3.** The method of claim 1, wherein receiving an app request for a mobile app further includes receiving the request from the consumer interacting with a website interface for the method, the consumer using the mobile device to access the website interface (step 212).

**4.** The method of claim 1, wherein receiving an app request for a mobile app further includes receiving the request from an enterprise transaction service associated with the enterprise terminal device, the consumer performing an enterprise registration with the enterprise transaction service (step 213).

**5.** The method of claim 1, wherein receiving an app request for a mobile app further includes receiving the request from the consumer utilizing an interface of the enterprise terminal device (step 214).

**6.** The method of any preceding claim, wherein delivering the mobile app to a mobile device further includes identifying the mobile device as one of: a mobile phone, a tablet, a personal digital assistant, and a laptop (step 221).

**7.** The method of any preceding claim, wherein obtaining a registration request from the mobile app further includes acquiring from the registration request identifying characteristics associated with the mobile device, the identifying characteristics being gathered by the mobile app (step 222).

**8.** The method of any preceding claim, wherein registering a consumer further includes interacting with the consumer to acquire registration information defined by a policy (step 261).

**9.** The method of any preceding claim, wherein registering a consumer further includes contacting an enterprise transaction service with a mobile device identifier sent from the mobile app to confirm a prior registration of the consumer with the enterprise transaction service to confirm registration (step 262).

**10.** The method of any preceding claim, wherein sending the token to the mobile app further includes encrypting the token and/or digitally signing the token (step 251).

**11.** The method of claim 1, wherein:
the registration request is obtained in response to requesting a registration with an enrollment service when a flag value indicates the registration is incomplete (step 310);
the token is obtained from the enrollment service; and
the token is securely stored on the mobile device when the registration is being processed the first time (step 340).

**12.** The method of claim 11, wherein requesting a registration with an enrollment service further includes initiating the registration at a first startup of the method or when the flag value indicates that the registration is incomplete (step 312).

**13.** The method of claim 11, wherein requesting a registration with an enrollment service further includes initiating the registration at a direction of the consumer that activates an option for the registration and when the flag value indicates that the registration is incomplete (step 311).

**14.** The method of claim 11, wherein requesting a registration with an enrollment service further includes providing to the enrollment service a mobile device identifier as part of the registration (step 313).

**15.** The method of any of claims 11 to 14, wherein delivering the token to an enterprise terminal device further includes providing the token to the enterprise terminal device in a format defined by a policy (step 351).
